# EUROPÄISCHE PATENTANMELDUNG

(11) **EP 2 727 950 A1**
(43) Veröffentlichungstag der Anmeldung: **07.05.2014**
(21) Anmeldenummer: 12191102.8
(22) Anmeldetag: 02.11.2012
(51) Int. Cl.: C08G 63/90, C08K 5/29, C08L 67/00

(54) **Verfahren zum Trocknen von Kunststoffen auf Basis von Polyesterharzen**

(71) Anmelder: Rhein Chemie Rheinau GmbH, 68219 Mannheim (DE); IfBB - Institut für Biokunststoffe und Bioverbundwerkstoffe, Hochschule Hannover, 30453 Hannover (DE)
(72) Erfinder: Andreas Krug, 68309 Mannheim (DE); Martina Hauck, Dr., 64287 Darmstadt (DE); Andrea Fruth, Dr., 65197 Wiesbaden (DE); Hans-Josef Endres, Prof. Dr.-Ing, 30890 Barsinghausen (DE); Daniela Jahn, 30163 Hannover (DE); Frau Andrea Siebert-Raths, 30173 Hannover (DE)
(74) Vertreter: Siegers, Britta

(57) **Zusammenfassung**

Gegenstand der vorliegenden Erfindung ist ein Verfahren zum Trocknen von Kunststoffen auf Basis von Polyesterharzen, dadurch gekennzeichnet, dass mindestens ein aromatisches monomeres Carbodiimid und/oder mindestens ein aromatisches polymeres Carbodiimid mit dem Polyesterharz und gegebenenfalls weiteren Additiven vermischt wird.

## Beschreibung

Gegenstand der vorliegenden Erfindung ist ein Verfahren zum Trocknen von Kunststoffen auf Basis von Polyesterharzen, vorzugsweise biobasierten Polyesterharzen.

Kunststoffe auf Basis von Polyesterharzen sind mittels Kondensationspolymerisation hergestellte Polymere, die Esterbindungen enthalten.

Biobasierte Kunststoffe, sogenannte Biopolymere, sind im Vergleich zu petrochemisch basierten Kunststoffen aufgrund der eingesetzten biobasierten Rohstoffe ökologisch nachhaltigere Werkstoffe. Insbesondere im Hinblick auf den Umweltschutz und die drohende Klimaerwärmung haben biobasierte Kunststoffe eine zunehmend Bedeutung nicht nur im Bereich Verpackung, sondern auch bei der Herstellung langlebiger sowie technischer Kunststoffprodukte erlangt. Um jedoch biobasierte Werkstoffe im Vergleich zu herkömmlichen und etablierten Werkstoffen konkurrenzfähig zu machen, sind vielfach noch Optimierungen in der Werkstoffherstellung und -verarbeitung notwendig.

Biobasierte Kunststoffe aus aliphatischem Polyesterharz, werden durch Polymerisation fermentativ gewonnener Monomere aus Stärke, Zucker, Kohlenhydraten, Pflanzenöl oder Fetten hergestellt. Ebenso handelt es sich bei biobasierten Kunststoffen um aliphatisch-aromatische Polyester, welche auf einer biogen hergestellten Diolkomponente basieren, sowie um Biopolyamide, bei denen die Säurekompontente aus natürlich vorkommenden Stoffen gewonnen wird.

Biobasierte Kunststoffe haben den großen Vorteil, dass sie sehr umweltfreundlich sind. Nachteiligerweise sind diese jedoch sehr hydrolyseempfindlich und müssen demnach zeit- und energieintensiv getrocknet werden, da ansonsten Molmassenverlust und Viskositätsabnahme unvermeidbar sind und in Folge dessen zu einer schlechteren Verarbeitbarkeit führen.

Diese Kunststoffe müssen deshalb über einen bestimmten Zeitraum bei einer bestimmten Temperatur getrocknet werden, so dass die empfohlenen Wassergehalte von < 300 ppm erreicht werden. Erst nach Erreichen eines bestimmten Wassergehalts kann die gewünschte Verarbeitung erfolgen.

In der Regel erfolgt die Trocknung thermisch bei Temperaturen von 40 bis 100°C und dauert, in Abhängigkeit von der Temperatur, mehrere Stunden (siehe Poly(lactid Acid), Synthesis, Structures, Properties, Processing, and Applications, Edited by R. Auras et al, Seite 194- 195,2010), sowie das Technische Datenblatt für "Injection Molding Process Guide" und "Fiber Melt Spinning" über Ingeo ^{™} Biopolymer 3251 D und Natureworks ® PLA Polymer 6201 D. Zudem führt eine lange thermische Belastung des Polyesterharzes zu vermehrter Zersetzung.

Es bestand daher die Aufgabe, ein neues, zeitsparendes Verfahren zur effektiven Trocknung von Kunststoffen bereitzustellen, welches die Nachteile des Standes der Technik nicht aufweist und eine wirtschaftliche und schnelle Trocknung ermöglicht.

Überraschenderweise wurde nun gefunden, dass das erfindungsgemäße Verfahren zur Trocknung von Kunststoff auf Basis von Polyesterharz, vorzugsweise biobasiertem Kunststoff auf Basis von Polyesterharz, diese Aufgabe erfüllt.

Gegenstand der vorliegenden Erfindung ist daher ein Verfahren zur Trocknung von Kunststoff auf Basis von Polyesterharz, vorzugsweise biobasiertem Kunststoff auf Basis von Polyesterharz, wonach mindestens ein aromatisches monomeres Carbodiimid und/oder mindestens ein aromatisches polymeres Carbodiimid mit dem Polyesterharz und gegebenenfalls weiteren Additiven vermischt wird.

Kunststoffe auf Basis von Polyesterharz im Sinne der Erfindung sind mittels Kondensationspolymerisation hergestellte Polymere, die Esterbindungen enthalten. Dabei handelt es sich vorzugsweise um Polyethylentherephthalat (PET), Polytrimethylenterephthalat (PTT) und/oder Polybutylenterephthalat (PBT).

In einer bevorzugten Ausführungsform der Erfindung handelt es sich bei dem Polyesterharz um ein biobasiertes Polyesterharz. Bei den biobasierten Kunststoffen im Sinne der Erfindung handelt es sich vorzugsweise um aliphatische Polyesterharze, welche durch Polymerisation fermentativ gewonnener Monomere oder fermentativ gewonnener Polymere aus Stärke, Zucker, Kohlenhydraten, Pflanzenöl oder Fetten hergestellt worden sind, um aliphatisch-aromatische Polyesterharze, welche auf einer biogen hergestellten Diolkomponente basieren, sowie um Biopolyamide, bei denen die Säurekomponente aus natürlich vorkommenden Stoffen gewonnen wird.

Als biobasiertes Polyesterharz sind dabei Polymilchsäure (PLA), Polyhydroxyalkanoate (PHA), Polybutylenadipat-Terephthalat (PBAT), Polybutylensuccinat (PBS) und/oder Polybutylensuccinatterephthalat (PBST) besonders bevorzugt.

Dabei mit umfasst sind auch Blends aus biobasierten Kunststoffen, vorzugsweise Polymilchsäure (PLA), Polyhydroxyalkanoate (PHA), Polybutylenadipat-Terephthalat (PBAT), Polybutylensuccinat (PBS) und/oder Polybutylensuccinatterephthalat (PBST), mit Polycarbonat, Polybutylenterephthalat (PBT), Polymethylmethacrylat (PMMA), Acrylnitril-Butadien-Styrol (ABS) und/oder Polyamid.

Die vorgenannten Polyesterharze sind kommerziell erhältlich.

In einer weiteren bevorzugten Ausführungsform der Erfindung handelt es sich vorzugsweise um aliphatische Polyesterharze, welche durch Polymerisation fermentativ gewonnener Monomere oder fermentativ gewonnener Polymere aus Stärke, Zucker, Kohlenhydraten, Pflanzenöl oder Fetten hergestellt werden.

Die als aliphatisches Polyesterharz besonders bevorzugte Polymilchsäure ist kommerziell verfügbar, z.B. bei der Firma NatureWorks LLC oder kann nach den, dem Fachmann geläufigen Verfahren, wie z.B. durch Ringöffnungspolymerisation von Lactiden, hergestellt werden. Der Einsatz der Polymilchsäure, die durch Ringöffnungspolymerisation von Lactiden entstanden ist, ist dabei auf keines der beiden Enantiomere, L-Milchsäure oder D-Milchsäure oder Mischungen daraus, beschränkt. Auch andere Formen für Polymilchsäure sowie Copolymere, welche Polymilchsäure enthalten, sind mitumfasst.

Die als aliphatisches Polyesterharz besonders bevorzugten Polyhydroxyalkanoate sind kommerziell verfügbar, z. B. bei der Firma Metabolix Inc., oder können nach den, dem Fachmann geläufigen Verfahren, wie z. B. durch mikrobielle Fermentation aus Zucker oder Fetten, hergestellt werden.

Als aromatisch monomere bzw. aromatisch polymere Carbodiimide sind sterisch gehinderte wie auch sterisch nicht gehinderte Carbodiimide einsetzbar, wobei der Einsatz von sterisch gehinderten Carbodiimide bevorzugt ist.

Der Begriff polymeres Carbodiimid umfasst dabei auch oligomere Carbodiimide.

In einer weiteren bevorzugten Ausführungsform der vorliegenden Erfindung verfügt mindestens eines der eingesetzten Carbodiimide über endständige Isocyanatfunktionalitäten. Diese Carbodiimide sind vorzugsweise nicht sterisch gehindert.

Bei dem aromatischen monomeren Carbodiimid handelt es sich vorzugsweise um eine Verbindung der Formel (I)

R'-N=C=N-R" (I),

in der
und R' und R" gleich oder verschieden sind und Aryl, C₇-C₁₈-Aralkyl entsprechen,
R' und R" im Fall eines aromatischen Restes keine oder mindestens einen aliphatischen und/oder cycloaliphatischen und/oder aromatischen Substituenten mit mindestens einem Kohlenstoffatom tragen, die auch Heteroatome, wie vorzugsweise O, N und/oder S, tragen können.

Besonders bevorzugt handelt es sich bei dem aromatischen monomeren Carbodiimid um ein aromatisches Carbodiimid der allgemeinen Formel (II), 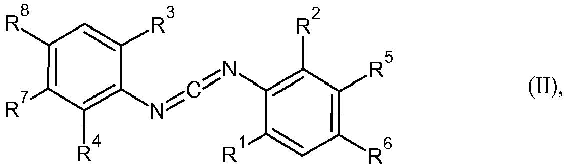 in der R¹ bis R⁴, R⁶ und R⁸ unabhängig voneinander H, C₁- bis C₂₀-Alkyl, bevorzugt verzweigtes C₃- bis C₂₀-Alkyl, C₃- bis C₂₀-Cycloalkyl, C₆- bis C₁₅-Aryl oder einen C₆- bis C₁₅-Aralkylrest bedeutet, der gegebenenfalls auch Heteroatome, wie vorzugsweise O, N und/oder S enthalten kann, und es sich bei den Resten R⁵ und R⁷ um Wasserstoff oder Isocyanatgruppen handelt.

Des Weiteren bevorzugt handelt es sich bei den Resten R¹ bis R⁴, R⁶ und R⁸ um Wasserstoff, Methyl- und/oder Diisopropylreste.

Bei den aromatischen polymeren Carbodiimiden handelt es sich vorzugsweise um Verbindungen der allgemeinen Formel (III),

R⁹-(-N=C=N-R'''-)ₘ-R¹⁰ (III),

in der
R''' einen aromatischen und/oder araliphatischen Rest bedeutet, R''' innerhalb des Moleküls gleich oder verschieden ist und bei verschiedenen Kombinationen jeder der vorgenannten Reste beliebig miteinander kombiniert werden kann, R''' keinen oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen kann, die auch Heteroatome tragen können,
R⁹ = C₁ - C₁₈-Alkyl, C₅ - C₁₈-Cycloalkyl, Aryl, C₇ - C₁₈-Aralkyl, -R'''-NH-COS-R¹¹, -R'''-COOR¹¹, -R'''-OR¹¹, -R'''-N(R¹¹)₂, -R'''-SR¹¹, -R'''-OH, R'''-NH₂, -R'''-NHR¹¹, -R'''-Epoxy, -R'''-NCO, -R'''-NHCONHR¹¹, -R'''-NHCONR¹¹R¹² oder -R'''-NHCOOR¹³ und
R¹⁰ = -N=C=N-Aryl, -N=C=N-Alkyl, -N=C=N-Cycloalkyl, -N=C=N-Aralkyl, -NCO, -NHCONHR¹¹, - NHCONHR¹¹R¹², -NHCOOR¹³, -NHCOS-R¹¹, -COOR¹¹, -OR¹¹, -N(R¹¹)₂, -SR¹¹, -Epoxy, -OH, -NH₂, -NHR¹¹,
wobei in R⁹ und R¹⁰ unabhängig voneinander R¹¹ und R¹² gleich oder verschieden sind und einen C₁ -C₂₀-Alkyl-, C₃-C₂₀-Cycloalkyl, C₇-C₁₈-Aralkylrest, Oligo-/Polyethylen- und/oder -Propylenglykole darstellen und R¹³ eine der Bedeutungen von R¹¹ hat oder einen Polyester- oder einen Polyamidrest bedeutet, und wobei
bei polymeren aromatischen Carbodiimiden m einer ganzen Zahl von 2 - 50 entspricht.

Besonders bevorzugt ist R⁹= Methyl, Diisopropylphenyl, Diisopropylphenylisocyanat, -R'''-NHCOOR¹¹ und/oder Cyclohexyl. Besonders bevorzugt für R¹⁰ sind -NCO und/oder -N=C=N-Diisopropylphenyl und/oder -N=C=N-Cyclohexyl und/oder -NHCOOR¹¹ und R¹¹ die vorgenannte Bedeutung hat.

Bei dem aromatischen polymeren Carbodiimid kann es sich aber auch um Verbindungen der Formel (III) handeln, bei denen R'''=1,3-substituiertes-2,4,6-Triisopropylphenyl und/oder ein Tetramethylxylylenderivat und/oder 2,4-substituiertes Tolylen, 2,6-substituiertes Tolylen und/oder Gemischen aus 2,4- oder 2,6-substituiertem Tolylen.

In einer weiteren Ausführungsform der vorliegenden Erfindung ist es auch möglich, eine Mischung verschiedener aromatischer monomerer und/oder aromatischer polymerer Carbodiimide einzusetzen.

Bei den vorgenannten aromatischen monomeren und auch den aromatisch polymeren Carbodiimiden handelt es sich bei den Verbindungen der Formeln (II) und (III) um käuflich erhältliche Verbindungen, die z.B. bei der Rhein Chemie Rheinau GmbH erhältlich sind.

Ebenso möglich ist auch die Herstellung der Carbodiimide nach den beispielsweise in Angewandte Chemie 74 (21), 1962, S. 801 - 806 beschriebenen Verfahren oder durch die Kondensation von Diisocyanaten unter Abspaltung von Kohlendioxid bei erhöhten Temperaturen, vorzugsweise bei 40 °C bis 200 °C, in Gegenwart von Katalysatoren. Geeignete Verfahren werden in DE-B-1156401 und in der DE-B-11 305 94 beschrieben. Als Katalysatoren haben sich vorzugsweise starke Basen oder Phosphorverbindungen bewährt. Vorzugsweise werden Phospholenoxide, Phospholidine oder Phospholinoxide sowie die entsprechenden Sulfide verwendet. Ferner können als Katalysatoren tertiäre Amine, basisch reagierende Metallverbindungen, Carbonsäuremetallsalze und nicht basische Organometallverbindungen verwendet werden.

Zur Herstellung der eingesetzten Carbodiimide und/oder Polycarbodiimide eignen sich alle Isocyanate, wobei im Rahmen der vorliegenden Erfindung bevorzugt Carbodiimide und/oder Polycarbodiimide verwendet werden, die auf durch C₁- bis C₄-Alkyl substituierten aromatischen Isocyanaten aufbauen, wie vorzugsweise 2,6-Diisopropylphenylisocyanat, 2,4,6-Triisopropylphenyl-1,3-diisocyanat, 2,4,6-Triethylphenyl-1,3-diisocyanat, 2,4,6-Trimethyl-phenyl-1,3-diisocyanat, 2,4'-Diisocyanatodiphenylmethan, 3,3',5,5'-Tetraisopropyl-4,4'-diisocyanatodiphenylmethan, 3,3',5,5'-Tetraethyl-4,4'-diisocyanatodiphenylmethan, Tetramethylxyloldiisocyanat, 1,5-Naphthalindiisocyanat, 4,4'-Diphenylmethandiisocyanat, 4,4'-Diphenyldimethylmethan-diisocyanat, 1,3-Phenylendiisocyanat, 1,4-Phenylendiisocyanat, 2,4-Tolylendiisocyanat, 2,6-Tolylendiisocyanat, ein Gemisch aus 2,4-Tolylendiisocyanat und 2,6-Tolylendiisocyanat, Hexamethylendiisocyanat, Cyclohexan-1,4-diisocyanat, Xylylendiisocyanat, Isophorondiisocyanat, Dicyclohexylmethan-4,4'-di-isocyanat, Methylcyclohexandiisocyanat, Tetramethylxylylendiisocyanat, 2,6-Diisopropylphenylen-isocyanat und 1,3,5-Triisopropylbenzol-2,4-diisocyanat oder deren Gemische, oder auf substituierten Aralkylen, wie 1,3-Bis-(1-methyl-1-isocyanato-ethyl)-benzol, basieren. Besonders bevorzugt ist es, wenn die Carbodiimide und/oder Polycarbodiimide auf 2,4,6-Triisopropylphenyl-1,3-diisocyanat und/oder 2,6-Diisopropylphenylenisocyanat und/oder Tetramethylxylylendiisocyanat und/oder 2,4-Tolylendiisocyant und/oder 2,6-Tolylendiisocyanat und/ oder Gemischen aus 2,4- und 2,6-Tolylendiisocyanat basieren.

Vorzugsweise werden mindestens 0,1- 2 Gew.-%, bevorzugt 0,3 - 1,5 Gew.-%, ganz besonders bevorzugt 0,5 bis 1 Gew. % eines aromatischen monomeren Carbodiimids oder eines aromatischen polymeren Carbodiimids eingesetzt.

In einer weiteren Ausführungsform des erfindungsgemäßen Verfahrens werden weitere Additive, vorzugsweise Nukleierungsmittel, Fasern zur Verstärkung, Schlagzähigkeitsmodifikatoren, Fließverbesserer und/oder UV-Stabilisatoren eingesetzt.

Das erfindungsgemäße Trocknungsverfahren wird vorzugsweise bei Temperaturen von 40° bis 90°C, besonders bevorzugt bei Temperaturen von 60 bis 80°C durchgeführt.

Die Trocknung selber kann in allen Behältern durchgeführt werden, aus denen das Wasser gut und schnell entweichen kann.

Einsetzbar sind dabei handelsübliche Trockenlufttrockner des Typs Luxor der Firma Motan-Colortronic GmbH.

Die Carbodiimide können dabei über alle gängigen Rühr- und Mischaggregate in den Kunststoff eingemischt werden. Bevorzugt sind hier Extruder oder Kneter. Dabei handelt es sich um handelsübliche Aggregate.

Die nachfolgenden Beispiele dienen der Erläuterung der Erfindung, ohne dabei limitierend zu wirken.

### Ausführungsbeispiele:

### Verwendete Chemikalien:

**CDI I:** ein sterisch gehindertes aromatisches monomeres Carbodiimid gemäß Formel (II) ohne freie N=C=O-Gruppen, mit R⁵ bis R⁸ = H und R¹ bis R⁴ = Alkyl.
**CDI II,** ein sterisch gehindertes aromatisches polymeres Carbodiimid gemäß Formel (III) mit R⁹ und R¹⁰ = Aryl und R''' = Aryl.
**Polymilchsäure** (PLA) der Firma NatureWorks 6201 D und 3251 D, mit folgenden Charakteristika

| | |
|---|---|
| 6201 D: MFR [g/10 min] = 15 - 30 | (ASTM Methode: D1238/ 210°C, 2.16 kg) |
| 3251 D: MFR [g/10 min] = 80 | (ASTM Methode: D1238/ 210°C, 2.16 kg) |

wobei MFR für Melt flow rate steht.

### Verwendete Geräte

Es wurde ein Trockenlufttrockner (MDE40 mit 1 x 601 Trichter) der Firma Luxor verwendet. Dieser Trockner ist mit einem Gebläse für die Erzeugung von Trockenluft sowie einer Heizung zur genauen Temperaturregelung ausgestattet. Der Trockentrichter ist vollständig isoliert und durch die zylindrische Form war eine gleichmäßige Trocknung des Materials garantiert.

Das Verfahren zur Feuchtigkeitsmessung von Kunststoffen wurde nach EN ISO 15512 Verfahren C durchgeführt. Die Feuchtigkeitsaufnahme von den Polymilchsäure-Typen 3251D und 6201D mit einer Konzentration von 0% bzw. 1 oder 1,5% CDI I bzw. CDI II wurde wie nachstehend beschrieben mittels Aquatrac bei einer Trocknungstemperatur von 60 bzw. 80°C ermittelt.

Die jeweiligen Proben wurden zusammen mit Calciumhydrid in einem geschlossenen Messbecher unter Vakuum aufgeheizt. Das Wasser der jeweiligen Probe reagierte im Messbecher mit dem Reagenz Calciumhydrid (CaH₂) zu Calciumhydroxid (Ca(OH)₂) unter Wasserstoffentwicklung. Der dadurch entstehende Gasdruck ist proportional zur Wassermenge des Probenmaterials und dient als die Messgröße der Methode.

### Durchführung

Zur Ermittlung von Trocknungskurven und des Wassergehaltes wurden, um eine einheitliche Ausgangsfeuchte aller Materialien zu gewährleisten, je 2 kg des Granulates 88 Stunden bei 50% relative Luftfeuchte klimatisiert und die Ausgangsfeuchte wurde mittels Aquatrac bestimmt. Die Einarbeitung der Carbodiimide in die Polymilchsäure erfolgte mittels eines Labordoppelschneckenextruders ZE 34 Basic x 46 D der Firma KraussMaffei Berstorff GmbH.
Die eingesetzten Mengen an Carbodiimid und die Art des eingesetzten Carbodiimids ergeben sich aus den Tabellen 1 und 2.

Das Granulat wurde anschließend im Trockenlufttrockner bei 60°C bzw. 80°C getrocknet. Stündlich wurde die Feuchte des Granulates ermittelt, und aus diesen Daten wurde eine Trocknungskurve erstellt. Zudem ist die benötigte Zeit bis zum Erreichen eines Wassergehaltes von 300 ppm bzw.100 ppm in den Tabellen 1 und 2 aufgeführt.

**Tabelle 1 (T = 60°C)**

| Beispiel | PLA | CDI | Konzentration CDI | Temperatur | t [h] bis Wassergehalt 300 ppm | t [h] bis Wassergehalt 100 ppm |
|---|---|---|---|---|---|---|
| 1 (V) | 6201 D | - | - | 60 °C | 6-7 | 10 |
| 2 (E) | 6201 D | CDI I | 1% | 60 °C | 3 | 5 |
| 3 (E) | 6201 D | CDI I | 1,5% | 60 °C | 3 | 5 |
| 4 (E) | 6201 D | CDI II | 1% | 60 °C | 2-3 | 4-5 |
| 5 (E) | 6201 D | CDI II | 1,5% | 60 °C | 3 | |
| 6 (V) | 3251 D | - | - | 60 °C | 6-7 | 10 |
| 7 (E) | 3251 D | CDI I | 1% | 60 °C | 2-3 | |
| 8 (E) | 3251 D | CDI I | 1,5% | 60 °C | 1-2 | |
| 9 (E) | 3251 D | CDI II | 1% | 60 °C | 2 | 6 |
| 10 (E) | 3251 D | CDI II | 1,5% | 60 °C | 3-4 | |

**Tabelle 2 (T = 80°C)**

| Beispiel | PLA | CDI | Konzentration CDI | Temperatur | t [h] bis Wassergehalt 300 ppm | t [h] bis Wassergehalt 100 ppm |
|---|---|---|---|---|---|---|
| 11 (V) | 6201 D | - | - | 80 °C | 3 | 4-5 |
| 12 (E) | 6201 D | CDI I | 1% | 80 °C | 1-2 | 3-4 |
| 13 (E) | 6201 D | CDI I | 1,5% | 80 °C | 1 | 2-3 |
| 14(E) | 6201 D | CDI II | 1% | 80 °C | 1-2 | |
| 15 (E) | 6201 D | CDI II | 1,5% | 80 °C | 2 | |
| 16 (V) | 3251 D | - | - | 80 °C | 3-4 | 5 |
| 17 (E) | 3251 D | CDI I | 1% | 80 °C | 1 | 2-3 |
| 18 (E) | 3251 D | CDI I | 1,5% | 80 °C | 1 | 2 |
| 19 (E) | 3251 D | CDI II | 1% | 80 °C | 1 | 2-3 |
| 20 (E) | 3251 D | CDI II | 1,5% | 80 °C | 1 | |

Aus den Tabellen ist klar ersichtlich, dass sich mit dem erfindungsgemäßen Verfahren die Trocknungszeiten bis zum Erreichens eines Wassergehaltes von 300 ppm drastisch verringern lassen.

Bei dem schwieriger zu erreichenden Wassergehalt von 100 ppm ist ebenfalls ein deutlicher Effekt zu beobachten und die Trocknungszeiten verringern sich um mindestens ein Drittel bei dem erfindungsgemäßen Verfahren.

## Patentansprüche

1. Verfahren zur Trocknung von Kunststoff auf Basis von Polyesterharz, **dadurch gekennzeichnet, dass** mindestens ein aromatisches monomeres Carbodiimid und/oder mindestens ein aromatisches polymeres Carbodiimid mit dem Polyesterharz und gegebenenfalls weiteren Additiven vermischt wird.

2. Verfahren nach Anspruch 1, **dadurch gekennzeichnet, dass** mindestens eines der Carbodiimide sterisch gehindert ist.

3. Verfahren nach einem der Ansprüche 1 oder 2, **dadurch gekennzeichnet, dass** es sich bei dem aromatischen monomeren Carbodiimid um eine Verbindung der Formel (I)
R'-N=C=N-R" (I)
handelt, in der
R' und R" gleich oder verschieden sind und Aryl, C₇ - C₁₈-Aralkyl entsprechen,
R' und R" im Fall eines aromatischen Restes keine oder mindestens einen aliphatischen und/oder cycloaliphatischen und/oder aromatischen Substituenten mit mindestens einem Kohlenstoffatom tragen, die auch Heteroatome tragen können.

4. Verfahren nach Anspruch 3, **dadurch gekennzeichnet, dass** es sich bei dem aromatischen monomeren Carbodiimid um ein aromatisches Carbodiimid der allgemeinen Formel (II) 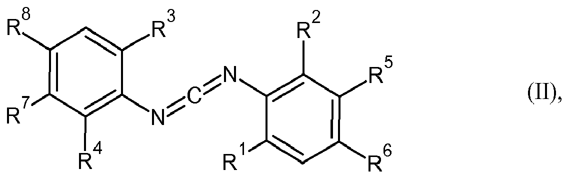 in der R¹ bis R⁴, R⁶ und R⁸ unabhängig voneinander H, C₁- bis C₂₀-Alkyl, bevorzugt verzweigtes C₃- bis C₂₀-Alkyl, C₃- bis C₂₀-Cycloalkyl, C₆- bis C₁₅-Aryl oder einen C₆- bis C₁₅-Aralkylrest bedeutet, besonders bevorzugt Wasserstoff, Methyl- und/oder Diisopropylreste und R⁵ und R⁷ unabhängig voneinander Wasserstoff oder Isocyanatgruppen bedeuten.

5. Verfahren nach einem der Ansprüche 1 bis 4, **dadurch gekennzeichnet, dass** es sich bei dem aromatischen polymeren Carbodiimid um Verbindungen der allgemeinen Formel (III),
R⁹-(-N=C=N-R'''-)ₘ-R¹⁰ (III)
handelt, in der
R''' einen aromatischen und/oder araliphatischen Rest bedeutet, R''' innerhalb des Moleküls gleich oder verschieden ist und bei verschiedenen Kombinationen jeder der vorgenannten Reste beliebig miteinander kombiniert werden kann, R''' keinen oder in mindestens einer ortho-Stellung zum aromatischen Kohlenstoffatom, das die Carbodiimidgruppe trägt, aliphatische und/oder cycloaliphatische und/oder aromatische Substituenten mit mindestens einem Kohlenstoffatom tragen kann, die auch Heteroatome tragen können,
R⁹ = C₁ - C₁₈-Alkyl, C₅ - C₁₈-Cycloalkyl, Aryl, C₇ - C₁₈-Aralkyl, -R'''-NH-COS-R¹¹, -R'''-COOR¹¹, -R'''-OR¹¹, -R'''-N(R¹¹)₂, -R'''-SR¹¹, -R'''-OH, R'''-NH₂,-R'''-NHR¹¹, -R'''-Epoxy, -R'''-NCO, -R'''-NHCONHR¹¹, -R'''-NHCONR¹¹R¹² oder -R'''-NHCOOR¹³ und
R¹⁰ = -N=C=N-Aryl, -N=C=N-Alkyl, -N=C=N-Cycloalkyl, -N=C=N-Aralkyl, -NCO, -NHCONHR¹¹, - NHCONHR¹¹R¹², -NHCOOR¹³, -NHCOS-R¹¹, -COOR¹¹, -OR¹¹, -N(R¹¹)₂, -SR¹¹, -Epoxy, -OH, -NH₂, -NHR¹¹,
wobei in R⁹ und R¹⁰ unabhängig voneinander R¹¹ und R¹² gleich oder verschieden sind und einen C₁ -C₂₀-Alkyl-, C₃ - C₂₀-Cycloalkyl, C₇ - C₁₈-Aralkylrest, Oligo-/Polyethylen-und/oder -Propylenglykole darstellen und R¹³ eine der Bedeutungen von R¹¹ hat oder einen Polyester- oder einen Polyamidrest bedeutet, und wobei
m einer ganzen Zahl von 2 bis 50 entspricht.

6. Verfahren nach einem der Ansprüche 1 bis 5, **dadurch gekennzeichnet, dass** es sich bei dem aromatischen polymeren Carbodiimid um Verbindungen der Formel (III) handelt, bei denen R''' einem 1,3-substituierten-2,4,6-Triisopropylphenyl und/oder einem Tetramethylxylylenderivat und/oder 2,4-substituierten Tolylen und/oder 2,6-substituierten Tolylen und/oder Gemischen aus 2,4- oder 2,6-substituierten Tolylen entspricht.

7. Verfahren nach einem der Ansprüche 1 bis 6, **dadurch gekennzeichnet, dass** es sich bei dem Polyesterharz um Polyethylentherephthalat (PET), Polytrimethylenterephthalat (PTT) und/oder Polybutylenterephthalat (PBT) handelt.

8. Verfahren nach einem der Ansprüche 1 bis 6, **dadurch gekennzeichnet, dass** es sich bei dem Polyesterharz um ein biobasiertes Polyesterharz handelt.

9. Verfahren nach Anspruch 8, **dadurch gekennzeichnet, dass** es sich bei dem biobasierten Polyesterharz um Polymilchsäure (PLA), Polyhydroxyalkanoate (PHA), Polybutylenadipat-Terephthalat (PBAT), Polybutylensuccinat (PBS) und/oder Polybuytlensuccinatterephthalat (PBST) handelt.

10. Verfahren nach einem der Ansprüche 1 bis 6, **dadurch gekennzeichnet, dass** es es sich bei dem Polyesterharz um Blends aus biobasierten Kunststoffen, vorzugsweise Polymilchsäure (PLA), Polyhydroxyalkanoate (PHA), Polybutylenadipat-Terephthalat (PBAT), Polybutylensuccinat (PBS) und/oder Polybuytlensuccinatterephthalat (PBST) mit Polycarbonat, Polybutylenterephthalat (PBT), Polymethylmethacrylat (PMMA), Acrylnitril-Butadien-Styrol (ABS) und/oder Polyamid handelt.

11. Verfahren nach einem der Ansprüche 1 bis 10, **dadurch gekennzeichnet, dass** die Trocknung bei Temperaturen von 40° bis 90° C erfolgt.

12. Verfahren nach einem der Ansprüche 1 bis 11, **dadurch gekennzeichnet, dass** mindestens 0,1- 2 Gew.-%, bevorzugt 0,3 - 1,5 Gew.-%, ganz besonders bevorzugt 0,5 bis 1 Gew. % eines aromatischen monomeren Carbodiimids oder eines aromatischen polymeren Carbodiimids eingesetzt wird.

13. Verfahren nach einem der Ansprüche 1 bis 12, **dadurch gekennzeichnet, dass** als weitere Additive Nukleierungsmittel, Fasern zur Verstärkung, Schlagzähigkeitsmodifikatoren, Fließverbesserer und/oder UV-Stabilisatoren eingesetzt werden.

14. Verfahren nach einem der Ansprüche 1 bis 13, **dadurch gekennzeichnet, dass** das Vermischen in einem Extruder erfolgt.
